# FASCICULE DE BREVET EUROPEEN

(11) **EP 3 074 247 B1**
(45) Date de publication et mention de la délivrance du brevet: **09.05.2018**
(21) Numéro de dépôt: 14805238.4
(22) Date de dépôt: 26.11.2014
(51) Int. Cl.: B60C 13/02

(54) **PNEUMATIQUE COMPORTANT UN MOTIF DE MASQUAGE DE DEFAUT SUR UN FLANC**
REIFEN MIT EINEM DEFEKTMASKIERENDEN MUSTER AUF EINER SEITENWAND
TYRE COMPRISING A DEFECT-MASKING PATTERN ON A SIDEWALL

(30) Priorité: 29.11.2013 FR 1361862
(43) Date de publication de la demande: 05.10.2016
(73) Titulaire: Compagnie Générale des Etablissements Michelin, 63000 Clermont-Ferrand (FR)
(72) Inventeur: MUHLHOFF, Olivier, F-63040 Clermont-Ferrand Cedex 9 (FR)
(74) Mandataire: Demaure, Pierre-Yves
(86) Numéro de dépôt international: PCT/EP2014/075597
(87) Numéro de publication internationale: WO 2015/078881

(56) Documents cités:
- WO-A1-2012/066717
- FR-A1- 2 412 426
- JP-A- H11 321 243

## Description

### DOMAINE DE L'INVENTION

La présente invention concerne un pneumatique en matériau caoutchoutique pour véhicule automobile comprenant un flanc et un motif formé sur ce flanc.

### ETAT DE LA TECHNIQUE

Un pneumatique comporte de manière connue une carcasse interne, une bande de roulement, un bourrelet d'accrochage à une jante, un flanc, et un élément intérieur d'étanchéité. La carcasse interne est composée d'au moins une nappe carcasse de fils enrobés de caoutchouc. Lors d'une étape de fabrication du pneumatique, cette nappe carcasse est coupée puis assemblées sur un tambour. Cette nappe pouvant faire plusieurs fois le tour de ce tambour, il existe ainsi une pluralité de couches formée à partir d'une même nappe carcasse. Or, il est possible qu'au cours de la mise en place de la nappe, la fin de cette nappe ne coïncide pas exactement avec le début de cette nappe sur le tambour, de sorte qu'il existe un surplus de nappe dans l'assemblage. Cette superposition crée localement une surépaisseur sur l'ébauche crue du pneumatique. Une fois cette ébauche crue vulcanisée et le pneumatique en résultant gonflé, cette surépaisseur apparaît en creux au niveau du flanc du pneumatique. Or ce creux est particulièrement visible sur le pneumatique, notamment sous certaines conditions d'éclairage, ce qui peut constituer un motif de non achat par un consommateur alors même que ce défaut n'est pas préjudiciable à la sécurité. Afin de masquer ce défaut sur le flanc du pneumatique, selon un état de la technique antérieur décrit dans le brevet US6, 439,287, il est proposé de former un motif moiré sur l'ensemble du flanc du pneumatique et notamment dans la région où se trouve la déformation vallonnement/creux créée par le chevauchement des extrémités de ou des nappes carcasses. Plusieurs motifs moirés sont décrits. Ces motifs moirés constituent des motifs d'interférence comportant notamment des stries. Ainsi, ces motifs moirés créent des interférences lorsque la lumière est réfléchie par le flanc du pneumatique. Les différences de réflexion de la lumière qui existaient entre la zone de vallonnement/creux et le reste de la surface du flanc, ne sont ainsi plus visibles à l'oeil nu.

Un problème de cet état de la technique est que le procédé de fabrication de ces motifs moirés est complexe et coûteux à mettre en oeuvre. Un autre problème est que ce motif n'apporte pas une esthétique satisfaisante vis-à-vis du consommateur.

Dans ce contexte, la présente invention vise à masquer ce défaut de déformation flanc d'une manière plus simple, et ceci pour une grande majorité d'angle d'observation d'un consommateur.

Dans un autre état de la technique JP-A-11321243, il est divulgué un pneumatique en matériau caoutchoutique comprenant un flanc et un motif formé sur ce flanc. Le motif comprend une pluralité d'éléments en protubérance. Ces éléments en protubérance ont la forme de portions de calotte sphérique de rayon R.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales, l'une intérieure, et l'autre extérieure, ladite surface extérieure étant destinée à entrer en contact avec une chaussée lorsque le pneumatique roule.

Par « bourrelet » d'un pneumatique, on entend une partie du pneumatique destinée à prendre assise sur une jante de roue.

Par « flanc » d'un pneumatique, on entend une surface latérale du pneumatique disposée entre la bande de roulement du pneumatique et un bourrelet de ce pneumatique.

Par « élément en protubérance interpénétré avec d'autres éléments en protubérance adjacents », on entend que la calotte sphérique formée par l'élément en protubérance est interrompue par les autres éléments en protubérance adjacents, de sorte que, la distance entre le sommet de la calotte sphérique et le sommet d'un autre élément en protubérance adjacent est inférieure au diamètre de cette calotte sphérique.

Par « motif formé sur un flanc», on entend une partie de flanc présentant des caractéristiques d'état de surface homogène différentes du reste du flanc. Ce motif peut délivrer des informations techniques et légales, et d'autre part peut permettre aux consommateurs de distinguer l'origine du produit.

### RESUME DE L'INVENTION

A cette fin, l'invention propose un pneumatique en matériau caoutchoutique comprenant un flanc et un motif formé sur ce flanc. Le motif comprend une pluralité d'éléments en protubérance, ces éléments en protubérance ayant la forme de portions de calotte sphérique. Dans le motif, chaque élément en protubérance est interpénétré avec plusieurs éléments en protubérance adjacents, de sorte que la distance entre un sommet de l'élément en protubérance et un sommet d'un autre élément en protubérance adjacent est inférieure au diamètre de l'élément en protubérance.

Ainsi, comme on va le voir par la suite, l'interpénétration des calottes sphériques entre elles permet d'éviter une trop grande absorption de la lumière par la texture du flanc du pneumatique. Les rayons lumineux provenant d'une même source lumineuse qui éclairent le flanc du pneumatique sont ainsi sensiblement déviés de la même manière sur le motif, aussi bien au niveau du motif recouvrant la partie déformée du flanc qu'au niveau du motif recouvrant le flanc où il n'y a pas de déformation.

Selon des modes de réalisation non limitatifs, le pneumatique, peut comporter en outre une ou plusieurs caractéristiques supplémentaires parmi les suivantes :

La densité d'éléments en protubérance dans le motif est supérieure ou égale à 0,2 éléments en protubérance par mm². Cela permet de donner au motif un aspect plus uniforme vis-à-vis d'un observateur.

Vue en coupe, tout ou partie des éléments en protubérance comporte une ouverture angulaire inférieure ou égale à 70°. Cela permet d'obtenir une meilleure surface de réflexion pour la lumière. Le motif apparaît ainsi plus clairement sur le flanc du pneumatique.

Les éléments en protubérance sont alignés les uns par rapport aux autres dans le motif. Les limites du motif sont ainsi mieux maîtrisées.

Tout ou partie des éléments en protubérance comporte une rugosité de surface de paramètre Ra inférieur à 30 µm. Cela permet d'obtenir une surface proche d'une surface polie et ainsi de limiter la dispersion de la lumière.

Le pneumatique comporte un logement en creux dans le flanc, le motif étant disposé dans le logement.

Les éléments en protubérance se raccordent au niveau de zones de raccordement, ces zones de raccordement étant courbes. Ces zones présentent un rayon de raccordement r, tel que r≤ R/3.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement un flanc d'un pneumatique, ledit flanc comportant un motif faisant contraste par rapport à ce flanc ;
- la **figure 2** est une représentation en perspective d'une pluralité d'éléments en protubérance constituant le motif de la **figure 1** ;
- la **figure 3** représente schématiquement une vue en coupe d'une partie des éléments en protubérance de la **figure 1** ;
- la **figure 4** représente schématiquement une variante de réalisation du motif de la **figure 1** ;
- la **figure 5** représente schématiquement une variante de réalisation du motif de la **figure 1****.**

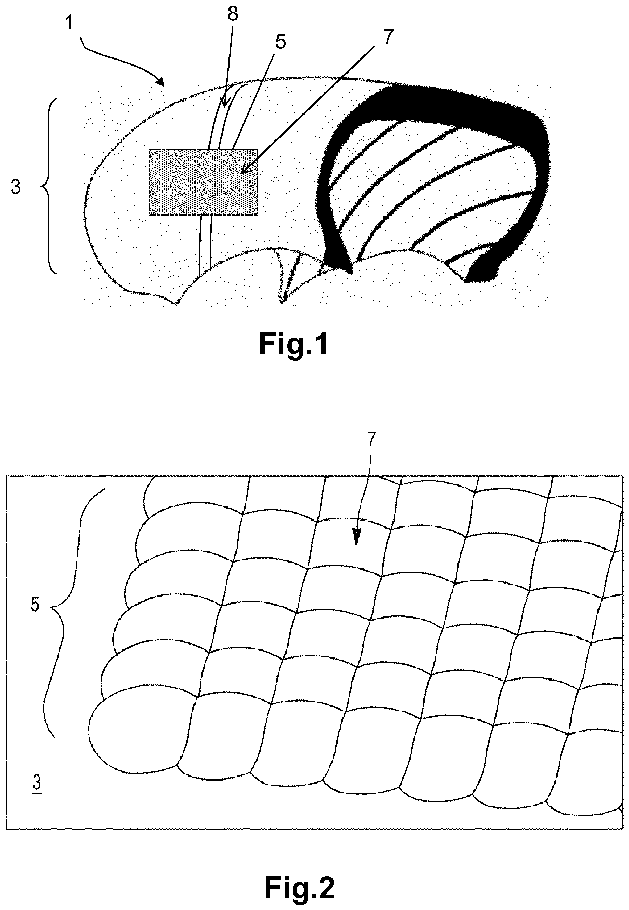

Dans la description qui va suivre, des éléments sensiblement identiques ou similaires seront désignés par des références identiques. La **figure 1** illustre le flanc 3 du pneumatique 1, ledit flanc 3 comprenant un motif 5. Sur la **figure 1** est représenté un échantillon du motif 5 qui recouvre la déformation flanc 8. Le motif 5 comprend une pluralité d'éléments en protubérance 7 par rapport à la surface du flanc. Le motif 5 s'étend sur tout ou partie de la surface du flanc et en particulier sur la partie comprenant la déformation flanc 8 créé par le chevauchement de nappe carcasse du pneumatique 1. Le motif 5 recouvre ainsi tout le vallonnement/creux 8. Lorsque le motif 5 s'étend sur toute la surface circonférentielle du flanc 3, un observateur du pneumatique verra peu de différence visuelle entre le motif 5 et le flanc 3.

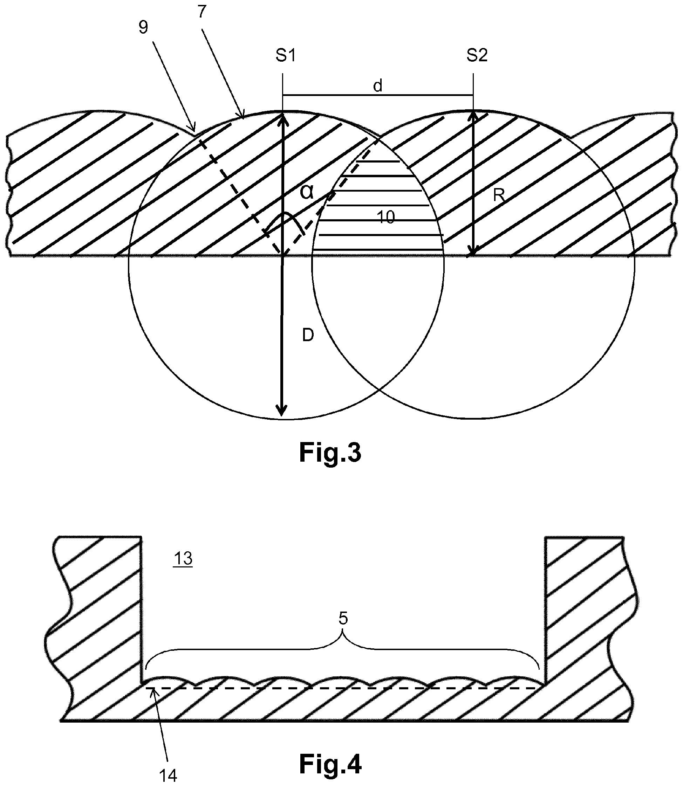

La **figure 2** montre une vue agrandie en perspective d'une partie du motif 5 de la figure 1. Comme on peut le voir sur la figure, les éléments en protubérance 7 ont la même forme et le motif 5 comporte une répétition de cette même forme. La forme est une surface fermée. La forme est une calotte sphérique de rayon R, également appelée coque ou microlentille.
On entend par calotte sphérique, une calotte dont le rayon R est constant. En variante, le rayon R des calottes peut être variable à plus ou moins 10%.
En vue en coupe **figure 3****,** la forme géométrique des éléments de protubérance 7 est ainsi convexe. Chaque élément en protubérance 7 a la propriété particulière de renvoyer une quantité de lumière qui reste constante, même lorsque le motif est incliné d'un faible angle par rapport à une position d'origine correspondant dans l'exemple à la position sur le flanc sans déformation. Dans un exemple non limitatif, l'inclinaison de l'angle est inférieure à 5°, ce qui correspond à l'inclinaison du renfoncement créé par la déformation flanc par rapport à la surface du flanc sans déformation.
Dans un mode de réalisation non limitatif illustré à la **figure 2****,** les éléments en protubérance 7 sont alignés les uns par rapport aux autres dans le motif 5 et sont en protubérance par rapport au flanc 3. Ceci permet de bien délimiter le motif 5.

Dans le motif 5, chaque calotte sphérique 7 est interpénétrée avec plusieurs éléments en protubérance adjacents. Ainsi, comme illustré sur la **figure 3****,** la distance d (appelée également « pas ») entre le sommet S1 d'une calotte sphérique et le sommet S2 d'une autre calotte sphérique adjacente est inférieure au diamètre D de cette calotte sphérique. Dans un mode de réalisation non limitatif, le pas d entre deux sommets S1-S2 est supérieur ou égal à 0,3mm et inférieur à 2mm. Ainsi, l'oeil humain, à une distance supérieure à 2mètres ne va percevoir qu'une texture du motif de couleur uniforme. Dans un exemple de réalisation non limitatif, le pas d entre deux sommets S1-S2 est égal à 1mm. Cela facilite la mise en oeuvre au niveau industriel des calottes et permet d'utiliser un outillage peu coûteux.
Comme on peut le voir sur la **figure 3****,** les calottes sphériques étant interpénétrées entre elles, elles présentent une zone commune 10 (illustrée par des hachures horizontales).

Sur la **figure 3****,** on peut également voir que grâce à cette architecture de calottes sphériques interpénétrées, ces dernières présentent des espaces inter-calottes 9 limités, c'est-à-dire que les espaces présentent une surface réduite.
Afin de réduire de façon optimum ces espaces inter-calottes 9, dans un mode de réalisation non limitatif, vue en coupe (coupe droite **figure 3**), chaque élément en protubérance 7 comporte une ouverture angulaire α inférieure ou égale à 70°. Dans le cas où l'ouverture serait plus grande, la surface des espaces inter-calottes 9 serait plus importante et entraînerait un risque d'absorption de lumière important. Par « ouverture angulaire α », on entend l'angle formé par la portion de calotte sphérique formant l'élément en protubérance 7. Plus particulièrement, par « ouverture angulaire α », on entend, vue en coupe, l'angle formé par deux segments passant par les espaces inter-calottes 9 et se rejoignant au centre de l'élément en protubérance 7.
En diminuant la surface de l'espace inter-calottes 9, les rayons lumineux incidents sur le motif 5 et donc sur les calottes sphériques 7, sont réfléchis vers l'observateur. Avec ce motif 5, la lumière est peu absorbée par la texture du flanc du pneumatique. Il n'y a donc pas de zone dite « noire ». La lumière est réfléchie de la même manière (même angle de réflexion) sur le motif 5 recouvrant le défaut vallonnement/creux 8 que sur le motif recouvrant la partie du flanc 3 ne comportant aucun défaut. Ainsi, l'effet visuel créé par le vallonnement/creux 8 n'est pratiquement plus visible voire plus du tout, quelque soit la position de l'observateur par rapport au flanc du pneumatique. L'ensemble du motif 5 permet de créer une zone dite « blanche » en raison de la réflexion optimisée de la lumière sur ce motif 5.

Afin d'augmenter la réflexion de la lumière, les calottes présentent une texture qui se rapproche d'une surface lisse, réfléchissante, qui ne disperse pas la lumière ni ne réduit l'intensité lumineuse renvoyée. Ainsi, le paramètre écart-moyen arithmétique Ra représentatif de la rugosité de surface est très faible et est inférieur à 30µm. La quantité de lumière renvoyée est maximisée. Quel que soit la position de l'observateur et donc de l'oeil par rapport au pneumatique 1, et quel que soit la source lumineuse qui éclaire le flanc 3 du pneumatique, le motif 5 permet de masquer l'effet visuel créé par le défaut dû au chevauchement de nappe carcasse, à savoir la déformation flanc.

Afin d'obtenir un procédé de fabrication facile à mettre en oeuvre, dans un mode de réalisation non limitatif, la densité d'éléments en protubérance 7 dans le motif 5 est supérieure ou égale à 0,2 éléments par mm². Ainsi, un exemple simple de procédé de fabrication d'un moule correspondant au négatif du motif 5 est d'effectuer un usinage par fraise sphérique du moule.

La **figure 4** présente une variante de réalisation dans laquelle le pneumatique comporte un logement 13 en creux dans le flanc 3. Le motif 5 est ainsi disposé dans ce logement 13 de sorte qu'on améliore la protection de ce motif contre l'usure provoquée, par exemple, par des râpages avec les trottoirs. Les éléments en protubérance 7 sont en protubérance par rapport au fond 14 du logement 13.

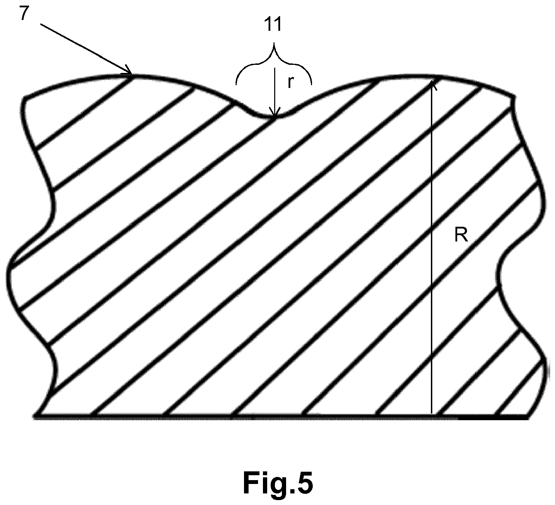

La **figure 5** présente une autre variante de réalisation dans laquelle, les éléments en protubérance 7 se raccordent au niveau de zones de raccordement 11. Ces zones de raccordement 11 sont courbes et présentent un rayon de raccordement r. Ce rayon de raccordement r est inférieur ou égal au tiers du rayon R des calottes sphériques. De cette manière, on limite les risques de propagation de fissures dans le motif, au niveau des zones de raccordement.

L'invention n'est pas limitée aux exemples décrits et représentés et diverses modifications peuvent y être apportées sans sortir de son cadre. Ainsi, dans un mode de réalisation non limitatif, les éléments en protubérance sont réalisés par usinage d'un moule à l'aide d'une fraise, ledit moule correspondant au négatif du motif. Cela permet de réaliser des éléments en protubérance alignés dans le motif selon au moins une direction préférentielle et ceci d'une manière simple et économique.
Dans un autre mode de réalisation non limitatif, le motif 5 comprend des éléments en protubérance 7 non alignés.
Dans un mode de réalisation non limitatif, les éléments en protubérance 7 sont réalisés au cours d'un traitement de surface du moule par microbillage. Avec ce procédé peu coûteux, on peut réaliser un motif comprenant des éléments en protubérance non alignés.
Dans un autre mode de réalisation non limitatif, le négatif du motif 5 est effectué par usinage laser.

Ainsi, l'invention décrite présente notamment les avantages suivants :
- avec la texture proposée du motif, la quantité de lumière renvoyée varie très peu, même avec une variation locale d'angle de la surface du pneu créée par le renfoncement de la déformation. Ainsi, la régularité de la quantité de lumière provenant d'une source lumineuse, renvoyée vers un observateur par un élément en gomme, est améliorée. Et l'observateur perçoit ainsi une surface de couleur uniforme, malgré la variation locale de l'angle de la surface du flanc.
- avec les sphères interpénétrées entre elles, on évite d'avoir un creux entre les calottes sphériques qui absorberait la lumière et qui créerait une zone noire ;
- quelque soit la source lumineuse incidente qui éclaire le pneumatique (par exemple la lumière du soleil ou la lumière d'un magasin), il y a un masquage de la déformation flanc par le motif. La solution proposée ne dépend donc pas de la quantité de lumière réfléchie sur le flanc du pneumatique ; et
- un observateur du pneumatique ne distingue pratiquement plus, voire plus du tout la déformation flanc.

## Revendications

1. Pneumatique en matériau caoutchoutique comprenant un flanc (3) et un motif (5) formé sur ce flanc (3), ledit motif (5) comprenant une pluralité d'éléments en protubérance (7), lesdits éléments en protubérance (7) ayant la forme de portions de calotte sphérique de rayon R **caractérisé en ce que** dans le motif (5), chaque élément en protubérance (7) est interpénétré avec plusieurs éléments en protubérance adjacents, de sorte que la distance (d) entre un sommet de l'élément en protubérance (7) et un sommet d'un autre élément en protubérance adjacent est inférieure au diamètre (D) de l'élément en protubérance.

2. Pneumatique selon la revendication 1, **caractérisé en ce que** la densité d'éléments en protubérance (7) dans le motif (5) est supérieure ou égale à 0,2 éléments en protubérance par mm².

3. Pneumatique selon l'une des revendications 1 à 2, **caractérisé en ce que**, vue en coupe, tout ou partie des éléments en protubérance (7) comporte une ouverture angulaire (α) inférieure ou égale à 70°, cette ouverture angulaire correspondant à l'angle formé par la portion de calotte sphérique constituant le ou les éléments en protubérance (7).

4. Pneumatique selon l'une des revendications 1 à 3, **caractérisé en ce que** les éléments en protubérance (7) sont alignés les uns par rapport aux autres dans le motif (5).

5. Pneumatique selon l'une quelconque des revendications 1 à 4, **caractérisé en ce que** tout ou partie des éléments en protubérance (7) comporte une rugosité de surface de paramètre Ra inférieur à 30 µm.

6. Pneumatique selon l'une quelconque des revendications 1 à 5, le pneumatique comportant un logement (13) en creux dans le flanc (3), **caractérisé en ce que** le motif (5) est disposé dans le logement (13).

7. Pneumatique selon l'une quelconque des revendications 1 à 6, **caractérisé en ce que** les éléments en protubérance (7) se raccordent au niveau de zones de raccordement (11), ces zones de raccordement 11 étant courbes et présentant un rayon de raccordement r, tel que r≤ R/3.

## Patentansprüche

1. Reifen aus kautschukartigem Material, aufweisend eine Flanke (3) und ein auf dieser Flanke (3) ausgebildetes Muster (5), wobei das Muster (5) eine Vielzahl von vorspringenden Elementen (7) aufweist, wobei die vorspringenden Elemente (7) die Form von kugelförmigen Kuppeln mit Radius R aufweisen, **dadurch gekennzeichnet, dass** in dem Muster (5) jedes vorspringende Element (7) mit mehreren benachbarten vorspringenden Elementen durchdrungen ist, so dass der Abstand (d) zwischen einem Scheitel des vorspringenden Elements (7) und einem Scheitel eines anderen, benachbarten vorspringenden Elements kleiner als der Durchmesser (D) des vorspringenden Elements ist.

2. Reifen nach Anspruch 1, **dadurch gekennzeichnet, dass** die Dichte an vorspringenden Elementen (7) in dem Muster (5) größer oder gleich 0,2 vorspringende Elemente pro mm² ist.

3. Reifen nach einem der Ansprüche 1 bis 2, **dadurch gekennzeichnet, dass** in der Querschnittsansicht alle oder ein Teil der vorspringenden Elemente (7) eine Winkelöffnung (α) umfasst, welche kleiner oder gleich 70° ist, wobei diese Winkelöffnung dem Winkel entspricht, welcher durch den kugelförmigen Kuppelabschnitt gebildet wird, welcher das oder die vorspringenden Elemente (7) bildet.

4. Reifen nach einem der Ansprüche 1 bis 3, **dadurch gekennzeichnet, dass** die vorspringenden Elemente (7) in Bezug zueinander in dem Muster (5) ausgerichtet sind.

5. Reifen nach einem der Ansprüche 1 bis 4, **dadurch gekennzeichnet, dass** alle oder ein Teil der vorspringenden Elemente (7) einen Oberflächenrauheitskennwert Ra von kleiner als 30 µm umfasst.

6. Reifen nach einem der Ansprüche 1 bis 5, wobei der Reifen eine vertiefte Aufnahme (13) in der Flanke (3) umfasst, **dadurch gekennzeichnet, dass** das Muster (5) in der Aufnahme (13) angeordnet ist.

7. Reifen nach einem der Ansprüche 1 bis 6, **dadurch gekennzeichnet, dass** die vorspringenden Elemente (7) sich im Bereich von Verbindungszonen (11) verbinden, wobei diese Verbindungszonen (11) Kurven sind und einen Verbindungsradius r aufweisen, wie beispielsweise r≤ R/3.

## Claims

1. Tyre made of rubbery material comprising a sidewall (3) and a pattern (5) formed on this sidewall (3), the pattern (5) comprising a plurality of protruding elements (7), the said protruding elements (7) having the form of spherical-cap portions of radius R, **characterized in that,** within the pattern (5), each protruding element (7) interpenetrates with several adjacent protruding elements so that the distance (d) between a tip of the protruding element (7) and a tip of another adjacent protruding element is less than the diameter (D) of the protruding element.

2. Tyre according to Claim 1, **characterized in that** the density of protruding elements (7) within the pattern (5) is greater than or equal to 0.2 protruding elements per mm².

3. Tyre according to either of Claims 1 and 2, **characterized in that**, viewed in cross section, all or part of the protruding elements (7) subtend an angle (α) less than or equal to 70°, this subtended angle corresponding to the angle formed by the spherical-cap portion that makes up the protruding element or elements (7).

4. Tyre according to one of Claims 1 to 3, **characterized in that** the protruding elements (7) are aligned with one another within the pattern (5).

5. Tyre according to any one of Claims 1 to 4, **characterized in that** all or part of the protruding elements (7) have a surface roughness parameter Ra less than 30 µm.

6. Tyre according to any one of Claims 1 to 5, the tyre comprising a housing (13) recessed into the sidewall (3), **characterized in that** the pattern (5) is arranged in the housing (13).

7. Tyre according to any one of Claims 1 to 6, **characterized in that** the protruding elements (7) meet at connection zones (11), these connection zones (11) being curved and having a blend radius r such that r≤ R/3.
